# EUROPÄISCHE PATENTSCHRIFT

(11) **EP 1 640 572 B1**
(45) Veröffentlichungstag und Bekanntmachung des Hinweises auf die Patenterteilung: **16.11.2011**
(21) Anmeldenummer: 05106300.6
(22) Anmeldetag: 11.07.2005
(51) Int. Cl.: F01M 1/02, F01M 5/02, F16N 7/38

(54) **Verfahren zur Schmierung einer Kraftmaschine und eine Kraftmaschine**
Lubrication method for prime mover
Méthode de lubrification pour une machine motrice

(30) Priorität: 28.09.2004 DE 102004046902
(43) Veröffentlichungstag der Anmeldung: 29.03.2006
(73) Patentinhaber: ROBERT BOSCH GMBH, 70442 Stuttgart (DE)
(72) Erfinder: Kaefer, Oliver, 71711 Murr (DE); Weible, Reinhold, 70437 Stuttgart (DE); Gerundt, Oliver, 72119 Ammerbuch-Reusten (DE); Diekmann, Ralf, 71679 Asperg (DE)

(56) Entgegenhaltungen:
- DE-A1- 3 235 292
- DE-A1- 3 318 460
- FR-A- 942 403
- GB-A- 2 305 467
- JP-A- 57 076 217
- JP-A- 59 183 017
- JP-U- 58 063 309

## Beschreibung

### Stand der Technik

Die Erfindung nach dem Oberbegriff des Anspruchs 1 geht aus von einer Kraftmaschine mit einer Ölpumpe, die während des Betriebs der Kraftmaschine Öl in einen Ölkreislauf fördert, wobei die gesamte Ölmenge der Kraftmaschine in mindestens zwei Teilmengen unterteilt ist, von denen die Ölpumpe eine erste Teilmenge beim Start der Kraftmaschine in den Ölkreislauf der Kraftmaschine fördert, während die zweite Teilmenge in Abhängigkeit von Betriebsparametern der Kraftmaschine der ersten Teilmenge zumischbar ist. Betroffen sind Kraftmaschinen aller Art, insbesondere Brennkraftmaschine, Turbinen, Pumpen und Kompressoren, die durch Öl geschmiert und/oder gekühlt werden. Hierbei tritt das Problem auf, dass die Kraftmaschinen und das Öl möglichst schnell ihre optimale Betriebstemperatur erreichen und über den gesamten Betriebsbereich beibehalten.

In einigen Betriebszuständen, beispielsweise beim Kaltstart, beim Kurzstreckenverkehr oder bei langen Talfahrten von Kraftfahrzeugen, ist der Wärmeeintrag in das Kühlwasser und das Schmieröl durch die Brennkraftmaschine selbst nicht mehr ausreichend, insbesondere wenn der Wirkungsgrad der Brennkraftmaschine sehr gut ist. Demzufolge erreicht die Brennkraftmaschine ihre optimale Betriebstemperatur nicht in der gewünschten kurzen Zeit, was zu einem hohen Kraftstoffverbrauch, zu erhöhten Abgasemissionen und Verschleiß führt.

Aus der DE 41 09 498 A1 ist eine Vorrichtung und ein Verfahren zu einer sehr feinfühligen Regelung der Temperatur einer Brennkraftmaschine bekannt. Hierzu werden einer Steuereinrichtung mehrere Eingangssignale zugeleitet, wie z.B. die Temperatur der Brennkraftmaschine, die Drehzahl und Last der Brennkraftmaschine, die Fahrzeuggeschwindigkeit, der Betriebszustand einer Klimaanlage bzw. der Heizung des Fahrzeugs und die Temperatur des Kühlwassers. Ein Sollwertgeber der Steuereinrichtung ermittelt unter Berücksichtigung der Eingangssignale einen Temperatursollwert für die Brennkraftmaschine. Entsprechend einem Vergleich der Istwerte mit den Sollwerten wirkt die Steuereinrichtung auf ein Dreiwegeventil, das im Mündungsbereich einer Bypassleitung in einer Rohrleitung zwischen der Brennkraftmaschine und einem Kühler angeordnet ist. Je nach Stellung des Dreiwegeventils wird der Kühlmittelstrom auf den Kühlerzulauf und auf die Bypassleitung aufgeteilt. Damit wird eine Kühlung der Brennkraftmaschine nicht nur in Abhängigkeit von unmittelbar für die Temperaturentwicklung wichtigen Betriebsparametern erfasst, sondern auch in Abhängigkeit von Parametern von Zusatzaggregaten, die die Temperatur nur mittelbar beeinflussen. Weiterhin werden die Möglichkeiten zum Einstellen der optimalen Temperatur wesentlich erweitert, weil auch Störungen erfasst und berücksichtigt werden können. Durch die Zuordnung verschiedener Einsatzbedingungen zu unterschiedlichen Bereichen von Temperatursollwerten ist eine schnelle Einstellung der gewünschten Temperatur möglich, was durch unterschiedliche Prioritäten der Einsatzbedingungen weiter verfeinert werden kann.

Trotz der aufwändigen Kühlmittelsteuerung erreicht das Öl der Brennkraftmaschine sehr viel später seine optimale Betriebstemperatur.

Aus der DE 32 35 292 Al ist bekannt, innerhalb einer Ölwanne einer Brennkraftmaschinefür ein Kraftfahrzeug einen Topf anzuordnen, der über eine Leitung mit einer Ölpumpe verbunden ist. In der Leitung ist ein Thermostat angeordnet, der auf ein Doppelventil einwirkt, welches je nach Öltemperatur den Raum innerhalb des Topfes oder den Raum außerhalb des Topfes und die entsprechenden Ölmengen zum Ansaugen durch die Ölpumpe freigibt. Ein oberhalb des Topfes angeordnetes Ölauffangblech leitet das abtropfende Öl immer in den Topf, aus welchem es in den Raum außerhalb des Topfes überfließen kann. Bei kaltem Motor verschließt der untere Boden des Doppelventils die Bodenöffnung, so dass das Öl innerhalb eines kleinen Kreislaufs den Schmierstellen zugeführt wird. Wenn diese kleine Ölmenge eine bestimmte Temperatur erreicht, wird der Thermostat aktiviert, so dass das Doppelventil nach unten verschoben wird, um die Leitung mit der großen Ölmenge zu verbinden.

Die DE 33 18 460 Al zeigt ein Verfahren zur Beeinflussung der Temperatur des angesaugten Öls einer Umlaufschmierung einer Maschine oder dergleichen, wobei die Maschine eine Ölwanne und eine Ölpumpe mit einem einen Saugmund aufweisenden Saugrohr zum Ansaugen von in dem ölvorratsraum der Ölwanne befindlichem Öl aufweist Nach jedem Kaltstart der Maschine wird zur rascheren Erhöhung der Temperatur des von der Ölpumpe angesaugten Öle zumindest während eines Teilbereichs der zum Erwärmen der Maschine auf Betriebstemperaturen führenden Warmlaufphase der Maschine der Zufluss von von den geschmierten Maschinenteilen in die Ölwanne zurückgelangendem erwärmtem Öl zur Ölpumpe begümstigt, wobei das Verfahren derart ausgelegt ist, dass es zusätzlich bei Betriebstemperaturen der Maschine auf die Temperatur des von der Ölpumpe angesaugten Öls vergleichsmäßigend wirkt.

Weitere Ölumlaufschmierungen von Kraftmaschinen nach dem Oberbegriff des Anspruchs 1 gehen hervor aus der JP 59 183017 A, der JP 57 76217 A sowie der GB 2 305 467 A.

### Vorteile der Erfindung

Die Kraftmaschine gemäß Anspruch 1 besitzt mindestens eine von einer Ölwanne abgetrennte Kammer und zugeordnete Kühlflächen, wobei die Kammer durch ein ansteuerbares Verschlusselement mit einem Ansaugbereich verbunden werden kann. Erfindungsgemäß ist vorgesehen, dass die Kammer durch ein Schwallblech und eine im Wesentlichen zylindrische Schottwand gebildet ist, die den Ansaugbereich umfasst, wobei im oberen Bereich der Kammer eine Zulauföffnung und im unteren Bereich eine Ablauföffnung vorgesehen sind und das Verschlusselement ein Ventilring ist, der in der Schließposition die Zulauföffnung verschließt. Ein wichtiger Betriebsparameter ist in diesem Zusammenhang die Temperatur der Ölmenge, die von der Ölpumpe in den Ölkreislauf der Brennkraftmaschine gefördert wird. Es können aber auch andere Betriebsparameter allein oder zusätzlich verwendet werden, wie sie allgemein bei der Temperaturregelung von Brennkraftmaschinen bekannt sind, z.B. Temperaturen von Bauteilen der Brennkraftmaschine, die Drehzahl und Last der Brennkraftmaschine, die Fahrzeuggeschwindigkeit, der Betriebszustand einer Klimaanlage bzw. der Heizung des Fahrzeugs und die Temperatur des Kühlmittels.

Da sich bei niedrigen Temperaturen nur eine Teilmenge im Ölkreislauf der Brennkraftmaschine befindet, wird sie sehr schnell ihre optimale Betriebstemperatur erreichen, sodass die Nachteile einer zu niedrigen Öltemperatur schon nach kurzer Zeit überwunden sind. Mit zunehmender höherer Temperatur oder entsprechendem Anstieg anderer Betriebsparameter wird der ersten Teilmenge nach und nach Öl aus der zweiten Teilmenge zugemischt, sodass die Temperatur durch diese Maßnahme optimal geführt werden kann, bis die gesamte Ölmenge zur Kühlung und Schmierung der Brennkraftmaschine verwendet wird.

Der Ventilring wird in vorteilhafter Weise durch einen Steller betätigt. Bei geschlossener Zulauföffnung wird das Öl in der Kammer durch Unterdruck zurückbehalten, sodass es nicht in den Ansaugbereich gelangt. Zusätzlich kann der Ventilring mit einer Ventilhülse verbunden sein, die innerhalb der Schottwand geführt ist und mit der Ablauföffnung im unteren Bereich der Schottwand zusammenwirkt. Bei geschlossener Zulauf- und/oder Ablauföffnung gelangt das aus dem Rücklauf der Brennkraftmaschine zurückfliesende Öl direkt wieder in den Ansaugbereich zurück. Als Steller können mechanische, hydraulische, pneumatische, z.B. Unterdrucksteller, thermische, z.B. Dehnstoffelemente, Bimetalle oder SMAs (Shape Memory Alloys) oder elektrische Steller verwendet werden, die durch eine elektronische Steuereinheit in Abhängigkeit von den Betriebsparametern angesteuert werden. Vorteilhaft ist die Nutzung eines elektrisch beheizbaren Dehnstoffelements, mit welchen der Arbeitspunkt des Dehnstoffelements eingestellt werden kann.

In der Regel reicht es aus, dass das Verschlusselement den Zufluss aus der Kammer in den Ansaugbereich drosselt oder unterbindet, sodass der Durchfluss durch die Kammer unterbrochen oder stark gedrosselt ist. Somit wird zunächst kein oder nur ein geringer Teil des in der Kammer befindlichen Öls der übrigen ölmenge bedarfsweise beigemischt.

Die erfindungsgemäße Kraftmaschine ist auch mit einer so genannten Trockensumpfschmierung anwendbar, bei der das Öl der Brennkraftmaschine in einem Vorratsbehälter gesammelt wird. Derartige Trockensumpfschmierungen werden z.B. bei Sportfahrzeugen, Motorrädern, Geländefahrzeugen, Boots- und Schiffsantrieben angewendet. In der erfindungsgemäßen Kraftmaschine ist im Vorratsbehälter eine Speicherkammer vorgesehen, die über ein ansteuerbares Verschlusselement mit einem Ansaugbereich des übrigen Vorratsbehälters verbunden ist.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 einen schematischen Querschnitt durch eine Hubkolbenbrennkraftmaschine mit einer Ölwanne,
Fig. 2 einen schematischen Schnitt durch einen Vorratsbehälter für eine Trockensumpfschmierung und
Fig. 3 und 4 Varianten einer erfindungsgemäßen Ölwanne nach Fig. 1.

### Beschreibung der Ausführungsbeispiele

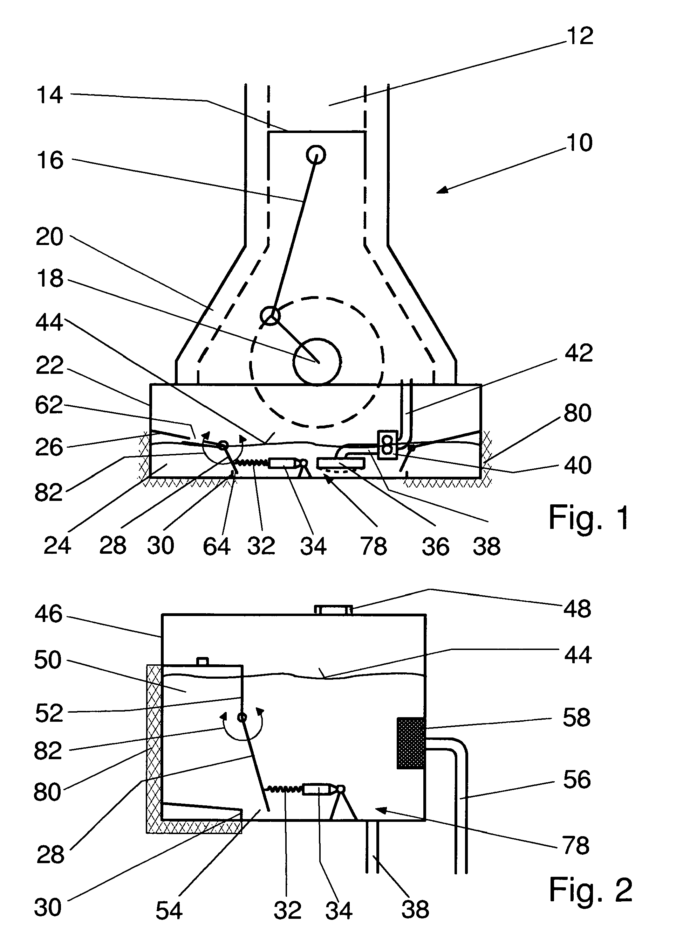

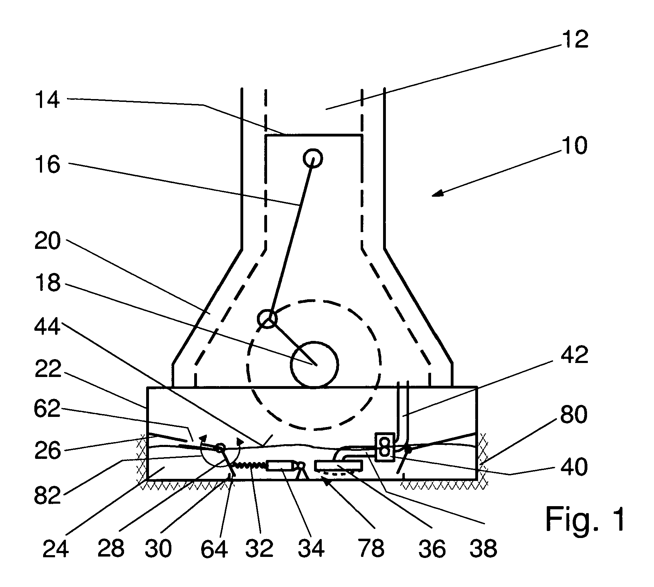

Eine in Fig. 1 dargestellte Brennkraftmaschine 10 ist eine mehrzylindrige Hubkolbenbrennkraftmaschine nach dem Stand der Technik, von der ein Zylinder 12 mit einem Kolben 14 dargestellt ist. Dieser ist über eine Pleuelstange 16 mit einer Kurbelwelle 18 triebmäßig verbunden, die in einem Kurbelgehäuse 20 drehbar gelagert. An das Kurbelgehäuse 20 schließt sich nach unten eine Ölwanne 22 an, in der das Öl für die Brennkraftmaschine 10 gesammelt wird. Der Ölspiegel ist mit 44 bezeichnet.

Die Ölwanne 22 besitzt an den Längsseiten jeweils eine Kammer 24, wobei zwischen den Kammern 24 ein Ansaugbereich 78 liegt, aus dem eine Ölpumpe 40 über einen Saugkorb 36 und eine Saugleitung 38 Öl ansaugt und in eine Druckleitung 42 fördert. An dieser sind Schmier- und Kühleinrichtungen angeschlossen, die nicht dargestellt sind.

Die Kammern 24 sind im Wesentlichen gleich ausgebildet. Sie können aber auch unterschiedlich gestaltet und untereinander verbunden sein. In der Ausführung nach Fig. 1 besitzt die Kammer 24 ein oberes Schwallblech 26, an dem eine Klappe 28 angelenkt ist. Diese liegt in einer Schließposition dichtend an einem Anschlag 30 an. Die Klappe 28 wird von einem Steller 34 in Form eines Dehnstoffelements über ein Federelement 32 betätigt, das in der Schließposition eine bestimmte Vorspannung aufweist, sodass die Klappe 28 erst nach einem vorgegebenen Stellweg bei einer vorgegebenen Temperatur öffnet. Hierbei bildet sich zwischen dem Anschlag 30 und der Klappe 28 eine Ablauföffnung 64. Der Stellweg der Klappe 28 ist durch einen Doppelpfeil 82 angedeutet.

Die Klappe 28 kann als Winkelklappe ausgebildet sein, wobei ein Schenkel der Klappe in der Schließposition am Anschlag 30 anliegt, während der andere Schenkel eine Zulauföffnung 62 verschließt, die im Schwallblech 26 vorgesehen sein kann.

Bei niedrigen Betriebstemperaturen der Brennkraftmaschine 10 ist die Klappe 28 geschlossen, sodass die Ölpumpe 40 nur eine begrenzte Teilmenge des gesamten Ölvorrats aus dem Ansaugbereich 78 ansaugt und in den Schmierölkreislauf der Brennkraftmaschine 10 fördern kann. Wird die optimale Betriebstemperatur erreicht, öffnet der Steller 34 die Klappe 28, wodurch Öl aus der Kammer 24 in den Ansaugbereich 78 strömen kann, sodass die Ölmenge im Ölkreislauf der Brennkraftmaschine 10 vergrößert wird. Gleichzeitig wird eine zusätzliche Kühlfläche an der äußeren markierten Oberfläche 80 der Kammer 24 aktiviert, wodurch dem Ölkreislauf vermehrt Wärme entzogen wird. Die Kühlflächen können außerdem Kühlrippen aufweisen. Durch diese Maßnahmen wird die Temperatur des Ölkreislaufs geregelt bzw. begrenzt.

Fig. 2 zeigt für ein Trockensumpfschmiersystem einen Vorratsbehälter 46 mit einem Einfüll- und Belüftungsstutzen, in dem das Öl für die Brennkraftmaschine 10 bevorratet wird. Aus dem Vorratsbehälter 46 saugt die Ölpumpe 40 das Öl über eine Saugleitung 38 an. Nach dem Durchströmen der Druckleitung 42 wird das Öl mittels einer nicht dargestellten Ölpumpe aus einer Auffangschale über eine Rücklaufleitung 56 und einen Filter 58 in den Vorratsbehälter 46 zurückgefördert. In diesem ist eine Speicherkammer 50 vorgesehen, die eine Schottwand 52 besitzt. Eine Klappe 28 ist an der Schottwand 52 angelenkt. Sie liegt in Schließstellung dichtend an einem Anschlag 30 an und bildet in geöffneter Stellung mit dem Anschlag eine Ablauföffnung 64 zum übrigen Vorratsbehälter 46. Die Klappe 28 wird von einem Steller 34, vorzugsweise einem Dehnstoffelement, über eine Feder 32 in Richtung des Doppelpfeils 82 betätigt. Es können aber auch andere Steller verwendet werden, z.B. mechanische, hydraulische, pneumatische, vorzugsweise Unterdrucksteller, thermische, wie z.B. Bimetalle oder SMAs (Shape Memory Alloys) oder elektrische. Die Steller werden zweckmäßigerweise über eine elektronische Steuereinheit in Abhängigkeit der relevanten Betriebsparameter angesteuert.

In der Ausgangsposition bei niedrigen Betriebstemperaturen ist die Klappe 28 geschlossen, sodass für die Schmierung und Kühlung der Brennkraftmaschine 10 nur der restliche Teil des Öls außerhalb der Speicherkammer 50 zur Verfügung steht. Hat sich dieser auf eine optimale Betriebstemperatur erwärmt, wird die Klappe 28 geöffnet und die Teilmenge des Öls aus der Speicherkammer 50 kann sich mit der übrigen Teilmenge mischen. Gleichzeitig wird dem über die Speicherkammer 50 fließende Teilmenge Wärme an der äußeren Oberfläche 80 der Speicherkammer entzogen, die bei geöffneter Klappe 28 aktiviert sind.

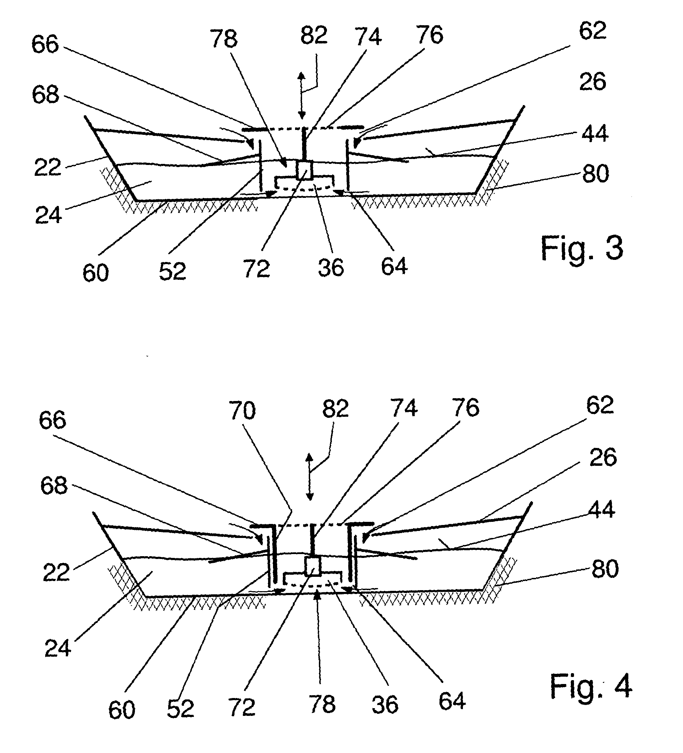

Die erfindungsgemäßen Ausführungen nach den Fig. 3 und 4 ähneln der Ausführung nach Fig. 1. Die Kammern 24 werden von Schwallblechen 26 gebildet, an die sich nach innen eine im Wesentlichen zylindrische Schottwand 52 anschließt. Im unteren Bereich der Schottwand 52 sind Ablauföffnungen 64 und im oberen Bereich zum Schwallblech 26 hin, Zulauföffnungen 62 vorgesehen. Innerhalb der Schottwand 52 befindet sich der Ansaugbereich 78, aus dem die Ölpumpe 40 über den Ansaugkorb 36 das Öl ansaugt. Bei der Ausführung nach Fig. 3 können die Zulauföffnungen 62 durch einen Ventilring 66 geschlossen werden, der von einem Steller 34 in Form eines Dehnstoffelements über einen Ventilstößel 74 in Richtung eines Doppelpfeils 82 betätigt wird. Der Ventilring 66 ist zweckmäßigerweise kreisringförmig. Er kann aber auch eine von einer Kreisringform abweichende Form haben.

Sind die Zulauföffnungen 62 geschlossen, gelangt das Öl aus dem Rücklauf über den inneren Bereich des Ventilrings 66, der eine Lochstruktur 76 aufweist, in den Ansaugbereich 78. Dadurch wird aus der Kammer 24 kein Öl bzw. nur eine unbedeutende Menge Öl angesaugt und die im Ölkreislauf befindliche Teilmenge Öl erwärmt sich schnell. Um auch die Ablauföffnung 64 zusammen mit der Zulauföffnung 62 zu schließen, ist der Ventilring 66 mit einer Ventilhülse 70 verbunden, die in der zylindrischen Schottwand geführt ist und als Ventilschieber arbeitet. Wird der Ölstrom durch die Kammer 24 reduziert oder unterbrochen, wird eine entsprechend geringere Wärmemenge über die äußere Oberfläche 82 der Kammer 24 dem Ölkreislauf entzogen.

Innerhalb der Kammer 24 ist an der Schottwand im Bereich der Zulauföffnung 62 ein Umlenkblech 68 vorgesehen. Dieses überdeckt die Zulauföffnung 62, wobei ihr freier Rand zum Ölwannenboden 60 geneigt verläuft. Das Umlenkblech 68 wirkt einem Planschen und Verschäumen des Öls entgegen und unterstützt die Beruhigung des Öls in der Kammer 24.

## Patentansprüche

1. Kraftmaschine (10) mit einer Ölpumpe (40), die während des Betriebs der Kraftmaschine (10) Öl in einen Ölkreislauf fördert, wobei die gesamte Ölmenge der Kraftmaschine (10) in mindestens zwei Teilmengen unterteilt ist, von denen die Ölpumpe (40) eine erste Teilmenge beim Start der Kraftmaschine (10) in den Ölkreislauf der Kraftmaschine (10) fördert, während die zweite Teilmenge in Abhängigkeit von Betriebsparametern der Kraftmaschine (10) der ersten Teilmenge zumischbar ist, wobei die Kraftmaschine mindestens eine von einer Ölwanne (22) abgetrennte Kammer (24) und zugeordnete Kühlflächen (80) besitzt, und wobei die Kammer (24) durch ein ansteuerbares Verschlusselement (66) mit einem Ansaugbereich (78) verbunden werden kann, wobei die Kammer (24) durch ein Schwallblech (26) und eine im Wesentlichen zylindrische Schottwand (52) gebildet ist, die den Ansaugbereich (78) umfasst, wobei im oberen Bereich der Kammer (24) eine zulauföffnung (62) und im unteren Bereich eine Ablauföffnung (64) vorgesehen sind, **dadurch gekennezichnet, dass** das Verschlusselement (66) ein Ventilring ist, der in der Schließposition die Zulauföffnung (62) verschließt.

2. Kraftmaschine (10) nach Anspruch 1, **dadurch gekennzeichnet, dass** die Schottwand (52) eine von der zylindrischen Form abweichende Form aufweist.

3. Kraftmaschine (10) nach Anspruch 1 oder 2, **dadurch gekennzeichnet, dass** im Bereich der Zulauföffnung (62) an der Schottwand (52) ein Umlenkblech (68) angeordnet ist, das die Zulauföffnung (62) mit Abstand überdeckt und zu seinem freien Rand hin zum Ölwannenboden (60) geneigt ist.

4. Kraftmaschine nach einem der Ansprüche 1 bis 3, **dadurch gekennzeichnet, dass** mit dem Ventilring (66) eine Ventilhülse (70) verbunden ist, die mit einer Ablauföffnung (64) im unteren Bereich der Schottwand (52) zusammenwirkt.

5. Kraftmaschine (10) nach einem der Ansprüche 1 bis 4, **dadurch gekennzeichnet, dass** ein Dehnstoffelement (72) im Ansaugbereich (78) innerhalb der zylindrischen Schottwand (52) angeordnet ist und den Ventilring (66) bzw. die Ventilhülse (70) über einen Ventilstößel (74) betätigt.

6. Kraftmaschine (10) nach Anspruch 5, **dadurch gekennzeichnet, dass** das Dehnstoffelement (72) ein elektrisch beheizbares Wachs-Dehnstoffelement ist.

7. Kraftmaschine (10) nach einem der vorhergehenden Ansprüche, **dadurch gekennzeichnet, dass** das Verschlusselement (28, 66, 70) in Abhängigkeit von der Drehzahl, dem Drehmoment und/oder der Öltemperatur der Kraftmaschine (10) und/oder der Temperatur einer Komponente oder eines verbundenen Aggregats angesteuert wird.

## Claims

1. Prime mover (10) having an oil pump (40) which feeds oil into an oil circuit during operation of the prime mover (10), wherein the total quantity of oil of the prime mover (10) is divided into at least two partial quantities, of which the oil pump (40) feeds a first partial quantity into the oil circuit of the prime mover (10) during starting of the prime mover (10), while the second partial quantity can be added to the first partial quantity depending on operating parameters of the prime mover (10), wherein the prime mover has at least one chamber (24), which is separated from an oil sump (22), and associated cooling surfaces (80), and wherein the chamber (24) can be connected to an intake region (78) by an activatable closure element (66), wherein the chamber (24) is formed by a baffle plate (26) and a substantially cylindrical bulkhead (52), which encompasses the intake region (78), wherein an inflow opening (62) is provided in the upper region of the chamber (24) and an outflow opening (64) is provided in the lower region, **characterized in that** the closure element (66) is a valve ring which closes the inflow opening (62) in the closed position.

2. Prime mover (10) according to Claim 1, **characterized in that** the bulkhead (52) has a shape which differs from the cylindrical shape.

3. Prime mover (10) according to Claim 1 or 2, **characterized in that** a diverter plate (68) is arranged in the region of the inflow opening (62) on the bulkhead (52), covers the inflow opening (62) at a distance and is inclined at its free end towards the oil sump base (60).

4. Prime mover according to one of Claims 1 to 3, **characterized in that** a valve sleeve (70) is connected to the valve ring (66) and interacts with an outflow opening (64) in the lower region of the bulkhead (52).

5. Prime mover (10) according to one of Claims 1 to 4, **characterized in that** an expansion element (72) is arranged in the intake region (78) within the cylindrical bulkhead (52) and actuates the valve ring (66) or the valve sleeve (70) via a valve plunger (74).

6. Prime mover (10) according to Claim 5, **characterized in that** the expansion element (72) is an electrically heatable wax expansion element.

7. Prime mover (10) according to one of the preceding claims, **characterized in that** the closure element (28, 66, 70) is activated depending on the rotational speed, the torque and/or the oil temperature of the prime mover (10) and/or the temperature of a component or of a connected unit.

## Revendications

1. Machine motrice (10) comprenant une pompe à huile (40), qui refoule de l'huile dans un circuit d'huile pendant le fonctionnement de la machine motrice (10), la quantité d'huile totale de la machine motrice (10) étant divisée en au moins deux quantités partielles, dont la pompe à huile (40) refoule une première quantité partielle au démarrage de la machine motrice (10) dans le circuit d'huile de la machine motrice (10), tandis que la deuxième quantité partielle peut être ajoutée en mélange à la première quantité partielle en fonction de paramètres de fonctionnement de la machine motrice (10), la machine motrice possédant au moins une chambre (24) séparée d'un carter d'huile (22) et des surfaces de refroidissement associées (80), et la chambre (24) pouvant être connectée à une région d'aspiration (78) par un élément de fermeture commandable (66), la chambre (24) étant formée par un déflecteur (26) et une cloison de séparation essentiellement cylindrique (52), qui comprend la région d'aspiration (78), une ouverture d'admission (62) étant prévue dans la région supérieure de la chambre (24) et une ouverture de sortie (64) étant prévue dans la région inférieure, **caractérisée en ce que** l'élément de fermeture (66) est une bague de soupape qui ferme l'ouverture d'admission (62) dans la position de fermeture.

2. Machine motrice (10) selon la revendication 1, **caractérisée en ce que** la cloison de séparation (52) présente une forme s'écartant de la forme cylindrique.

3. Machine motrice (10) selon la revendication 1 ou 2, **caractérisée en ce que** dans la région de l'ouverture d'admission (62), sur la cloison de séparation (52), est disposée une tôle déflectrice (68) qui recouvre l'ouverture d'admission (62) à distance et qui est inclinée vers son bord libre par rapport au fond du carter d'huile (60).

4. Machine motrice selon l'une quelconque des revendications 1 à 3, **caractérisée en ce que** qu'une douille de soupape (70) est connectée à la bague de soupape (66), laquelle coopère avec une ouverture de sortie (64) dans la région inférieure de la cloison de séparation (52).

5. Machine motrice (10) selon l'une quelconque des revendications 1 à 4, **caractérisée en ce qu'**un élément en matériau extensible (72) est disposé dans la région d'aspiration (78) à l'intérieur de la cloison de séparation cylindrique (52) et actionne la bague de soupape (66) ou la douille de soupape (70) par le biais d'un poussoir de soupape (74).

6. Machine motrice (10) selon la revendication 5, **caractérisée en ce que** l'élément en matériau extensible (72) est un élément en matériau extensible à base de cire pouvant être chauffé électriquement.

7. Machine motrice (10) selon l'une quelconque des revendications précédentes, **caractérisée en ce que** l'élément de fermeture (28, 66, 70) est commandé en fonction du régime, du couple et/ou de la température de l'huile de la machine motrice (10), et/ou d'un composant ou d'un groupe associé.
